(19) **Europäisches Patentamt** / **European Patent Office** / **Office européen des brevets**

(11) **EP 2 098 757 B1**

(12) **EUROPEAN PATENT SPECIFICATION**

(45) Date of publication and mention of the grant of the patent:
**23.04.2014 Bulletin 2014/17**

(51) Int Cl.:
*C21D 9/32* (2006.01)  *F16H 55/06* (2006.01)
*B24B 31/06* (2006.01)  *B24B 1/04* (2006.01)
*F02C 7/32* (2006.01)

(21) Application number: **09250627.8**

(22) Date of filing: **04.03.2009**

(54) **Gearbox gear and nacelle arrangement**

Getriebegang- und Getriebegondelanordnung

Agencement d'engrenage de boîte de vitesses et de nacelle

(84) Designated Contracting States:
**DE GB**

(30) Priority: **04.03.2008 US 41732**

(43) Date of publication of application:
**09.09.2009 Bulletin 2009/37**

(73) Proprietor: **United Technologies Corporation**
**Hartford, CT 06101 (US)**

(72) Inventors:
• **Chaudhry, Zaffir A.**
**South Glastonbury, Connecticut 06073 (US)**
• **Jaworowski, Mark R.**
**Glastonbury, Connecticut 06033 (US)**

(74) Representative: **Hall, Matthew Benjamin**
**Dehns**
**St. Bride's House**
**10 Salisbury Square**
**London EC4Y 8JD (GB)**

(56) References cited:
EP-A1- 1 602 744     WO-A2-2006/108108
US-A- 5 549 764      US-A1- 2002 088 773
US-A1- 2005 193 852

• PAUL NISKANEN: "reducing wear with superfinish technology", AMPTIAC, vol. 7, no. 1, 2003, XP002632813,
• TIMOTHY KRANTZ; BRIAN TUFTS: "pitting and bending fatigue evaluations of a new case-carburized gear steel", NASA/TM, December 2007 (2007-12), XP002632820,
• "Ferrium C61", QUESTEK, October 2003 (2003-10), XP002632821,
• T.L. KRANTZ; M.P. ALANOU: "Surface fatigue lives of case-carburized gears with an improved surface finish", NASA /TM, 2000, XP002632815,
• GARY SROKA, LANE WINKELMANN: "superfinishing gears", GEAR TECHNOLOGY, 2003, XP002632816,
• SUREN RAO, DOUG MCPERSON: "repair of helicopter gears", AGMA, October 2005 (2005-10), XP002632817, ISBN: 1-55589-863-7
• JUERGEN FISCHER: "basic studies concerning chemically accelerated vibratory surface finishing", TRI-SERVICE, 2007, XP002632818,
• KLEFF J WIEDMANN D: "NEUE WEGE BEI DER WÄRMEBEHANDLUNG UND OBERFLÄCHENBEHANDLUNG HOCHBELASTETER LUFTFAHRT-GETRIEBEBAUTEILE", HTM HÄRTEREI TECHNISCHE MITTEILUNGEN: ZEITSCHRIFT FÜR WERKSTOFFE, WÄRMEBEHANDLUNG UND FERTIGUNG, CARL HANSER VERLAG, MUNCHEN, DE, vol. 55, no. 1, 1 January 2000 (2000-01-01), pages 59-64, XP000893946, ISSN: 0341-101X

**Description**

This disclosure generally relates to a gas turbine engine. More particularly, the disclosure relates to gears for a gearbox, which has a nacelle arranged about the gearbox.

US 20060248900 is the closest prior art for claims 1 and 2.

Gas turbine engines for commercial aircraft applications typically include an engine core housed within a core nacelle. In one type of arrangement known as a turbofan engine, the core drives a large fan upstream from the core that provides airflow into the core. One or more spools are arranged within the core, and a gear train may be provided between one of the spools and the fan. A fan case and nacelle surround the fan and at least a portion of the core.

An inlet of the fan nacelle is designed to avoid flow separation. At cruise conditions, a thinner inlet lip is desired to minimize drag and increase fuel economy. The nacelles are sized to accommodate the widest section of engine, which is often dictated by the size of an accessory drive gearbox. The accessory drive gearbox, which is driven by a spool through a radial tower shaft and angle gearbox, is typically contained within either the fan nacelle or the core nacelle. The gearbox is sized to accommodate gears used to drive the accessory components. The gears must be durable enough to withstand the power transmitted through them without excessive bending, galling or pitting.

Typically, carburized steel gears are used in gearboxes. Helicopter gearboxes are subject to stringent noise, weight and vibration limitations. To address these limitations, the gears have been nitrided, thus enabling smaller gears to be used thereby reducing the weight of the gearbox. Helicopter gearbox gears separately have been superfinished to reduce bending and pitting. However, gearbox noise and weight and other helicopter gear issues traditionally have not been issues for airplane gas turbine engine applications.

What is needed is a gas turbine engine design with a reduced diameter nacelle, which houses a smaller accessory drive gearbox.

Viewed from a first aspect, the present invention provides a gas turbine engine comprising: a core housing; a core nacelle arranged about the core housing; and an accessory drive gearbox arranged radially between the core housing and an exterior surface of the core nacelle, the accessory drive gearbox comprising: a gear including an iron alloy having a strength of 1900 MPa or greater and a shear fracture toughness of $100 \, \text{MPa} \sqrt{m}$ or greater, wherein the gear has teeth including a case hardness of 60 HRC or greater that extends a depth of 12 microns from a surface of the gear; and wherein the teeth have a surface finish of approximately 76 nm (3 μin) or less.

Viewed from a second aspect, the present invention provides a gas turbine engine comprising: a fan case; a fan nacelle arranged about the fan case; and an accessory drive gearbox arranged radially between the fan case and an exterior surface of the fan nacelle, the accessory drive gearbox comprising: a gear including an iron alloy having a strength of 1900 MPa or greater and a shear fracture toughness of $100 \, \text{MPa} \sqrt{m}$ or greater, wherein the gear has teeth including a case hardness of 60 HRC or greater that extends a depth of 12 microns from a surface of the gear; and wherein the teeth have a surface finish of approximately 3 μin (76nm) or less.

In a preferred aspect, the gas turbine engine may include a spool that supports the turbine. The gearbox may be operatively coupled to the spool through a transmission device configured to transfer rotational drive from the spool to the gearbox. An accessory drive component may be coupled to the gearbox.

These and other features of the disclosure can be best understood from the following specification and drawings, the following of which is a brief description.

Figure 1 is a highly schematic view of a turbofan gas turbine engine.

Figure 2a is a front perspective view of an accessory drive gearbox.

Figure 2b is a rear perspective view of the accessory drive gearbox shown in Figure 2a.

Figure 3 is a schematic view of gas turbine accessory drive gearbox gears according to one example of this disclosure.

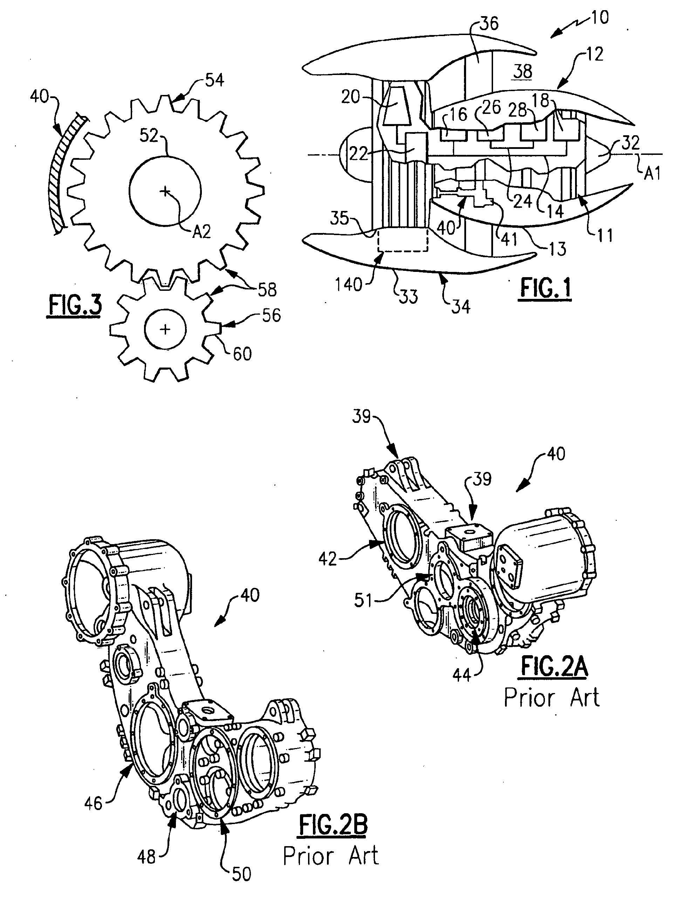

An engine 10 with geared architecture is shown in Figure 1. A pylon typically secures the engine 10 to an aircraft. The engine 10 includes a core nacelle 12 that surrounds a low spool 14 and high spool 24 that are rotatable about a common axis A1. The low spool 14 supports a low pressure compressor 16 and low pressure turbine 18. In the example, the low spool 14 drives a fan 20 through a gear train 22. The high spool 24 supports a high pressure compressor 26 and high pressure turbine 28. A combustor (not shown) is arranged between the high pressure compressor 26 and high pressure turbine 28. Compressed air from compressors 16, 26 mixes with fuel from the combustor 30 and is expanded in turbines 18, 28.

In the example shown, the engine 10 is a high bypass turbofan arrangement. In one example, the bypass ratio is greater than 10, and the turbofan diameter is substantially larger than the diameter of the low pressure compressor 16. The low pressure turbine 18 has a pressure ratio that is greater than 5:1, in one example. The gear train 22 is an epicycle gear train, for example, a star gear train, providing a gear reduction ratio of greater than 2.5:1, for example. It should be understood, however, that the above parameters are only exemplary of a contemplated geared architecture engine. That is, the invention is applicable to other engines including direct drive turbofans.

Airflow enters a fan nacelle 34, which surrounds the core nacelle 12 and fan 20. The fan 20 directs air into the core nacelle 12, which is used to drive the turbines 18, 28, as is known in the art. Turbine exhaust exits the core nacelle 12 once it has been expanded in the turbines 18, 28, in a passage provided between the core nacelle 12 and a tail cone 32.

A core housing 11 is arranged within the core nacelle 12 and is supported within the fan nacelle 34 by structure 36, such as flow exit guide vanes. A generally annular bypass flow path 38 is arranged between the core and fan nacelles 12, 34. The examples illustrated in the Figures depict a high bypass flow arrangement in which approximately eighty percent of the airflow entering the fan nacelle 34 bypasses the core nacelle 12. The bypass flow within the bypass flow path 38 exits the fan nacelle 34 through a fan nozzle exit area at the aft of the fan nacelle 34.

In the example shown in Figure 1, accessory drive gearboxes 40, 140 used to drive accessory components are schematically illustrated at different location within the engine. Unlike a helicopter gearbox, an aircraft gearbox is subject to temperatures above 300°F (150°C), which has a significant negative impact on gear life. Large gears have been used to survive in these temperatures. In one example, one accessory drive gearbox 140 is arranged in a radial space between the fan case 35 and an exterior surface 33 of the fan nacelle 34. An accessory drive component 41 is shown schematically mounted on the gearbox 40. Alternatively, an accessory drive gearbox 40 is arranged in a radial space between the core housing 11 and an exterior surface 13 of the core nacelle 12. Accessory drive gearboxes 40, 140 can be housed within either nacelle or both, if desired.

A prior art gearbox 40 is shown in Figures 2a and 2b. The gearbox 40 includes mounts 39 for securing the gearbox 40 to the engine 10. Example accessory drive components are: a fuel pump, hydraulic pump, generator and lubrication pump. The mounting pads for the accessory drive components indicated above are respectively provided at 42, 44, 46, 48. An input shaft mounting pad is illustrated at 51.

The gearbox 40 includes first and second gears 54, 56 that are schematically shown in Figure 3. The gears have an axis A2 that is parallel with the axis A1. The first and second gears 54, 56 include teeth 58 having surfaces 60. The first and second gears 54, 56 transmit rotational drive from a spool to an accessory drive component. As can be appreciated from the figures, as the size of the first and second gears 54, 56 and other gears within the gearbox 40 increases, the size of the gearbox 40 also increases thus increasing the circumference of the nacelle that houses the gearbox. To this end, it is desirable to reduce the size of the gearbox gears, thereby decreasing the size of the nacelle that is needed to accommodate the gearbox. In one disclosed embodiment, first a suitable alloy is selected having a desired toughness. Secondly, the alloy is case-hardened. Thirdly, the case-hardened alloy is superfinished.

In one example, an iron alloy is used to form the gears. It is desirable to provide a high strength, high toughness material, which enables to the size of the gear to be reduced. Example iron alloys with high strength and toughness contain nickel, cobalt, chromium, molybdenum, and carbon. One example iron alloy has a strength of approximately 1150 MPa or greater and a shear fracture toughness of approximately 100 MPa $\sqrt{\mathrm{m}}$ or greater. In another example, the iron alloy has a strength of approximately 1900 MPa or greater and a shear fracture toughness of approximately 130 MPa $\sqrt{\mathrm{m}}$ or greater. In one example, the gears are manufactured from AerMet 100 or AerMet 310, available from Carpenter Technologies. In another example, the gears are manufactured from Ferrium C69, available from Questek. Pyrowear 53 is another example iron alloy. The above-listed alloys are exemplary only.

Other suitable iron alloys can be selected according to U.S. Application Nos. 10/937,004 and 10/937,100. The iron alloys avoid disadvantages associated with typical gear alloys that have a low softening point and must be case-hardened at temperatures much greater than their tempering point. This results in distortion, which requires significant final machining. It is desirable to avoid machining after case-hardening in which material must be removed from the gear teeth to achieve desired dimensions.

The size of the gears can also be reduced by increasing the case hardness of the gear. High strength and toughness alloys, such as AerMet 100, cannot withstand airplane gearbox conditions. Accordingly, the gears 54, 56 can be carburized or nitrided to increase the hardness of the surface 60 to approximately 44 HRC or greater. In one example, the core hardness of the gears is approximately 52 HRC and the surface hardness is approximately 60-62 HRC after carburizing. Ion nitriding the surface 60 can result in a hardness of greater than 65 HRC in one example.

Alloy selection and hardening, such as nitriding, can eliminate post-process machining thereby greatly reducing manufacturing costs. By employing plasma/ion nitriding according to exemplary methods disclosed in U.S. Application Nos. 10/937,004; 10/870,489; and 10/937,100, desired case hardening can be achieved. For example, one desired surface treatment uses a high current density ion implantation that results in a case depth of 12 microns without distorting the part or producing a surface white layer that must be removed by subsequent machining.

Typically, the ground surface finish of an airplane gearbox gear is 16µ/in. Isotropic superfinishing can be employed to improve the surface characteristics of the gears 54, 56 thereby further enabling the size of the gears to be reduced. In one example, isotropic superfinishing processes can be employed. For example, the gear can be agitated in a vibrating finisher using an aqueous mixture of sodium bisulfate, monosodium phosphate, potassium dichromate and potassium phosphate to obtain an isotropic superfinish. In another example, oxalic acid, sodium nitrate and hydrogen peroxide can be used in the vibratory finisher. Bending, pitting and scoring of the gear teeth thereby can be reduced. Isotropic superfinishing can achieve a finish of 76 nm (3 $\mu$in).

By using a suitable iron alloy, such as Aermet 100 (which has also been case-hardened), and employing isotropic superfinishing, the power density of the gears can be increased by 53% in one example.

## Claims

1. A gas turbine engine (10) comprising:

   a core housing (11);
   a core nacelle (12) arranged about the core housing; and
   an accessory drive gearbox (40) arranged radially between the core housing and an exterior surface (13) of the core nacelle, the accessory drive gearbox comprising:

   a gear (54, 56) including an iron alloy having a strength of 1900 MPa or greater and a shear fracture toughness of 100 MPa $\sqrt{m}$ or greater,
   wherein the gear has teeth (58) including a case hardness of 60 HRC or greater that extends a depth of 12 microns from a surface of the gear; and
   wherein the teeth have a surface finish of approximately 76 nm (3 $\mu$in) or less.

2. A gas turbine engine (10) comprising:

   a fan case (35);
   a fan nacelle (34) arranged about the fan case; and
   an accessory drive gearbox (140) arranged radially between the fan case and an exterior surface (33) of the fan nacelle, the accessory drive gearbox comprising:

   a gear (54, 56) including an iron alloy having a strength of 1900 MPa or greater and a shear fracture toughness of 100 MPa $\sqrt{m}$ or greater,
   wherein the gear has teeth (58) including a case hardness of 60 HRC or greater that extends a depth of 12 microns from a surface of the gear; and
wherein the teeth have a surface finish of approximately 76 nm (3 $\mu$in) or less.

3. The gas turbine engine according to claim 1 or 2, wherein the iron alloy gear includes nickel, cobalt, chromium, molybdenum and carbon.

4. The gas turbine engine gearbox gear according to claim 1, 2 or 3, wherein the case hardness is greater than 65 HRC.

5. The gas turbine engine according to any of claims 1 to 4, wherein the shear fracture toughness of the iron alloy is greater than 130 MPa $\sqrt{m}$.

6. The gas turbine engine according to any of claims 1 to 5, further comprising:

   a spool (14, 24) that supports a turbine (18, 28), wherein the accessory drive gearbox is operatively coupled to the spool through a transmission device configured to transfer rotational drive from the spool to the accessory drive gearbox; and
   an accessory drive component (41) coupled to the accessory drive gearbox,
   wherein the gear is supported by the accessory drive gearbox and is configured to transmit rotational drive to the accessory drive component.

## Patentansprüche

1. Gasturbinenmaschine (10) aufweisend:

   ein Kerngehäuse (11);
   eine Kerngondel (12), die um das Kerngehäuse angeordnet ist; und
   ein Hilfsgetriebe (40), das radial zwischen dem Kerngehäuse und einer äußeren Fläche (13) der Kerngondel angeordnet ist, wobei das Hilfsgetriebe aufweist:

   ein Zahnrad (54, 56), das eine Eisenlegierung, die eine Festigkeit von 1900 MPa oder größer und eine Scherbruchzähigkeit von 100 MPa $\sqrt{m}$ oder größer hat, aufweist,

   wobei das Zahnrad Zähne hat (58), die eine Einsatzhärte von 60 HRC oder größer, die sich in eine Tiefe von 12 $\mu$m von einer Oberfläche des Zahnrads erstreckt, aufweist; und
   wobei der Zahn eine Oberflächengüte von

ungefähr 76mm (3μin) oder weniger hat.

**2.** Gasturbinenmaschine (10) aufweisend:

ein Bläsergehäuse (35);
eine Bläsergondel (34), die um das Bläsergehäuse angeordnet ist; und
ein Hilfsgetriebe (140), das radial zwischen dem Bläsergehäuse und einer äußeren Fläche (33) der Bläsergondel angeordnet ist, wobei das Hilfsgetriebe aufweist:

ein Zahnrad (54, 56), das eine Eisenlegierung, die eine Festigkeit von 1900 MPa oder größer und eine Scherbruchzähigkeit von 100 MPa $\sqrt{m}$ oder größer hat, aufweist, wobei das Zahnrad Zähne hat (58), die eine Einsatzhärte von 60 HRC oder größer, die sich in eine Tiefe von 12 μm von einer Oberfläche des Zahnrads erstreckt, aufweist; und wobei der Zahn eine Oberflächengüte von ungefähr 76mm (3μin) oder weniger hat.

**3.** Gasturbinenmaschine nach Anspruch 1 oder 2, wobei das Eisenlegierungszahnrad Nickel, Kobalt, Chrom, Molybdän und Kohlenstoff beinhaltet.

**4.** Gasturbinenmaschine nach einem der Ansprüche 1, 2 oder 3, wobei die Einsatzhärte größer als 65 HRC ist.

**5.** Gasturbinenmaschine nach einem der Ansprüche 1 bis 4, wobei die Scherbruchzähigkeit der Eisenlegierung größer als 130 MPA $\sqrt{m}$ ist.

**6.** Gasturbinenmaschine nach einem der Ansprüche 1 bis 5, weiterhin aufweisend:

eine Welle (14, 24), die eine Turbine (18, 28) trägt, wobei das Hilfsgetriebe betriebsgemäß mit der Welle durch eine Transmissionseinheit verbunden ist, die dazu ausgelegt ist, Rotationsantrieb von der Welle zu dem Hilfsgetriebe zu übertragen; und
eine Hilfsgetriebeeinheit (41), die mit dem Hilfsgetriebe verbunden ist,
wobei das Zahnrad von dem Hilfsgetriebe getragen wird und dazu ausgelegt ist, Rotationsantrieb zu dem Hilfsgetriebe zu übertragen.

**Revendications**

**1.** Moteur à turbine à gaz (10), comprenant :

un boîtier de noyau (11) ;
une nacelle de noyau (12) aménagée autour du boîtier
de noyau ; et
un train d'engrenage d'entraînement d'accessoires (40)
aménagé radialement entre le boîtier de noyau et une surface externe (13) de la nacelle de noyau, le train d'engrenage d'entraînement d'accessoires comprenant :
un engrenage (54, 56) comprenant un alliage de fer
ayant une résistance de 1900 MPa ou plus et une ténacité à la rupture par cisaillement de 100 MPa √m ou plus,
dans lequel l'engrenage a des dents (58) comprenant
une dureté de surface de 60 HRC ou plus qui s'étend sur une profondeur de 12 micromètres depuis une surface de l'engrenage ; et
dans lequel les dents ont un fini de surface d'environ 76 nm (3 μpouces) ou moins.

**2.** Moteur à turbine à gaz (10), comprenant :

un carter de soufflante (35) ;
une nacelle de soufflante (34) aménagée autour du
carter de soufflante ; et
un train d'engrenage d'entraînement d'accessoires (140) aménagé radialement entre le carter de soufflante et une surface externe (33) de la nacelle de soufflante, le train d'engrenage d'entraînement d'accessoires comprenant :
un engrenage (54, 56) comprenant un alliage de fer
ayant une résistance de 1900 MPa ou plus et une ténacité à la rupture par cisaillement de 100 MPa √m ou plus,
dans lequel l'engrenage a des dents (58) comprenant
une dureté de surface de 60 HRC ou plus qui s'étend sur une profondeur de 12 micromètres depuis une surface de l'engrenage ; et
dans lequel les dents ont un fini de surface d'environ 76 nm (3 μpouces) ou moins.

**3.** Moteur à turbine à gaz selon la revendication 1 ou la revendication 2, dans lequel l'engrenage en alliage de fer comprend du nickel, du cobalt, du chrome, du molybdène et du carbone.

**4.** Moteur à turbine à gaz selon la revendication 1, 2 ou 3, dans lequel la dureté de surface est supérieure à 65 HRC.

**5.** Moteur à turbine à gaz selon l'une quelconque des revendications 1 à 4, dans lequel la ténacité à la rupture par cisaillement de l'alliage de fer est supérieure à 130 MPa √m.

**6.** Moteur à turbine à gaz selon l'une quelconque des revendications 1 à 5, comprenant en outre :

une bobine (14, 24) qui supporte une turbine (18, 28),

dans lequel le train d'engrenage d'entraînement d'accessoires est couplé en service à la bobine via un dispositif de transmission configuré pour transférer la commande en rotation de la bobine au train d'engrenage d'entraînement d'accessoires ; et un composant d'entraînement d'accessoires (41) couplé au train d'engrenage d'entraînement d'accessoires, dans lequel l'engrenage est supporté par le train d'engrenage d'entraînement d'accessoires et est configuré pour transmettre la commande en rotation au composant d'entraînement d'accessoires.

**FIG.3**

**FIG.1**

**FIG.2A**
Prior Art

**FIG.2B**
Prior Art

**EP 2 098 757 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060248900 A
- US 937004 A
- US 10937100 B
- US 10870489 B